# EUROPÄISCHE PATENTSCHRIFT

(11) **EP 2 828 978 B1**
(45) Veröffentlichungstag und Bekanntmachung des Hinweises auf die Patenterteilung: **08.05.2019**
(21) Anmeldenummer: 13711031.8
(22) Anmeldetag: 19.03.2013
(51) Int. Cl.: H04B 3/54

(54) **VERFAHREN ZUR ÜBERTRAGUNG VON DATEN**
METHOD FOR TRANSMITTING DATA
PROCÉDÉ DE TRANSMISSION DE DONNÉES

(30) Priorität: 20.03.2012 DE 102012204412
(43) Veröffentlichungstag der Anmeldung: 28.01.2015
(73) Patentinhaber: Zumtobel Lighting GmbH, 32657 Lemgo (DE)
(72) Erfinder: KUFFER, Alois, 81243 München (DE); WITTMANN, Gerhard, 81249 München (DE)
(74) Vertreter: Thun, Clemens
(86) Internationale Anmeldenummer: PCT/EP2013/055703
(87) Internationale Veröffentlichungsnummer: WO 2013/139795

(56) Entgegenhaltungen:
- EP-A1- 1 786 115
- EP-A2- 0 998 053

## Beschreibung

Die vorliegende Erfindung betrifft ein Verfahren zur Übertragung von Daten, wobei die Übertragung der Daten mittels Powerline Kommunikation erfolgt.

Bei der Powerline Kommunikation handelt es sich um eine Übertragungstechnik, bei der Daten über ein Stromnetz bzw. Stromkabel übertragen werden. Hierbei ist vorgesehen, dass neben der Energieversorgung auch die Übertragung der Daten über die stromführenden Kabel erfolgt. Dies wird dadurch erreicht, dass auf die stromführende Leitung neben der herkömmlichen beispielsweise 50 Hz Frequenz noch eine oder mehrere Trägerfrequenzen modelliert werden.

Die Powerline Kommunikation kann hierbei beispielsweise für die interne Vernetzung in einem Haus verwendet werden, wodurch der Einsatz von zusätzlichen Netzwerkkabeln überflüssig wird, was beispielsweise bei Renovierungen von alten Häusern von Vorteil sein kann. Desweiteren wird die Powerline Kommunikation aber auch von Stromversorgungsunternehmen eingesetzt, um beispielsweise die Stromleitungen zu den Endverbrauchern für die Datenübertragung zu nutzen. Hierdurch besteht für den Endverbraucher dann die Möglichkeit, einen Internetanschluss über die Stromleitung und den Stromversorgungsunternehmer zu erhalten und so auf einen Internetanschluss über DSL, Satellit oder Kabelnetz verzichten zu können.

Ein weiteres Anwendungsgebiet, bei dem die Powerline Kommunikation zum Einsatz kommt, ist die Verwendung bei hausinternen Gegensprechanlagen oder Babyphonen, bei denen jeweils eine Übertragung von Sprachsignalen und somit wiederum von Daten über die hausinternen Stromleitungen erfolgt.

Die auf die 50 Hz Frequenz aufmodellierten Trägerfrequenzen bewegen sich hierbei entsprechend europäischen Normen in einem Frequenzbereich von 3 kHz bis 148,5 kHz, der je nach Anwendungsbereich in mehrere Frequenzbänder unterteilt sein kann.

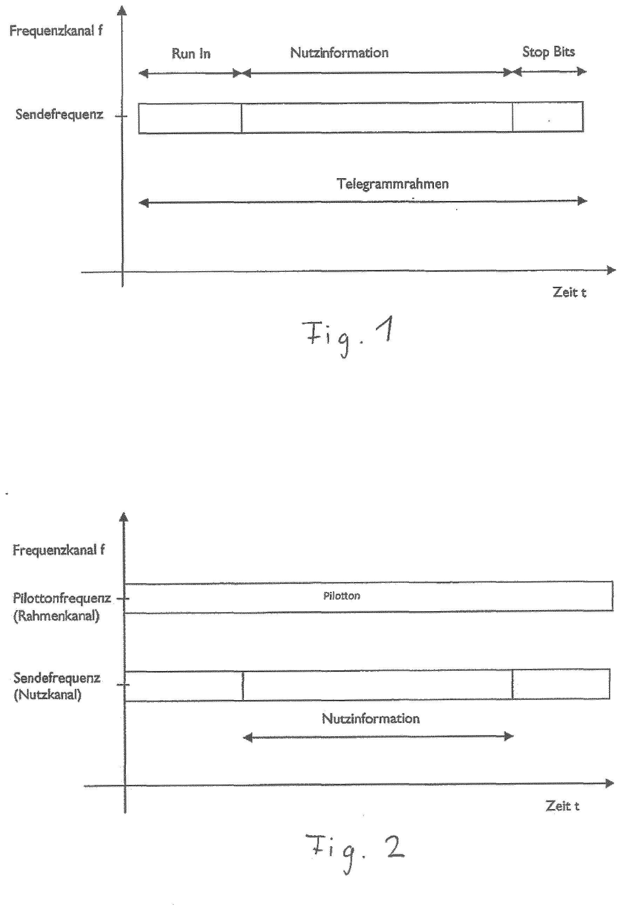

Im Einzelnen ist hierbei dann vorgesehen, dass über eine Sendefrequenz bzw. eine der Trägerfrequenzen die Daten übermittelt werden. In Figur 1 ist beispielhaft eine derartige Übertragung dargestellt, wobei der Telegrammrahmen bestehend aus Run In, Nutzinformationen in NRZ-Kodierung und Stop Bits im gleichen Frequenzkanal und sequentiell in der Zeit gebildet wird, was bedeutet, dass die zeitliche Form der Nutzinformationen zusammen mit dem Run In und den Stop Bits auf die vorgegebene zeitliche Form des Telegrammrahmens angepasst werden muss. Somit wird aufgrund der zeitlich sequentiellen Anordnung des Telegrammrahmens zur Nutzinformation in einem Übertragungskanal, die Form der Nutzinformation in der Zeit und auch im Pegel durch den Telegrammrahmen bzw. das Rahmensignal mitgeprägt.

Die Nutzinformation bzw. das Nutzsignal ist in seiner Zeit somit nicht unabhängig vom Telegrammrahmen bzw. Rahmensignal und muss daher zeitlich bestimmt werden, um es dann im Übertragungskanal zeitlich zum Rahmensignal platzieren zu können.

Durch diese notwendigen Maßnahmen, ergibt sich das Problem, dass Echtzeiteigenschaften des Nutzsignals verloren gehen, wodurch es nicht mehr so ohne Weiteres möglich ist, dass zeitliche Protokolleigenschaften des Nutzsignals in Echtzeit getunnelt werden können. Zu beachten ist hierbei auch, dass sich die Protokolleigenschaften des Nutzsignals auf die Übertragungseigenschaften der Powerline Kommunikation übertragen.

Zusätzlich ergibt sich auch das Problem, dass beispielsweise bei Lücken in der Übertragung die Verstärkung eines Empfängers durch die Automatik Gain Control (AGC) in einen Rauschbereich geregelt wird.

In der EP 0 998 053 A2 und der EP 1 786 115 A1 werden Möglichkeiten zur Übertragung der Daten mittels Powerline Kommunikation gezeigt.

Der vorliegenden Erfindung liegt dementsprechend die Aufgabe zugrunde, ein Verfahren zur Übertragung von Daten mittels Powerline Kommunikation zu schaffen, bei dem in einem Empfänger keine Verstärkung mehr in den Rauschbereich erfolgt, und bei dem die Nutzinformationen unabhängig von der zeitlichen Form des Telegrammrahmens übermittelt werden können.

Die Aufgabe wird durch ein Verfahren gemäß Anspruch 1 gelöst. Vorteilhafte Weiterbildungen der Erfindung sind Gegenstand der abhängigen Ansprüche.

Erfindungsgemäß ist ein Verfahren zur Übertragung von Daten vorgesehen, bei dem die Übertragung von Daten mittels Powerline Kommunikation erfolgt, wobei zeitlich parallel zum Übertragungskanal in dem die Nutzinformation übertragen wird, in einem weiteren Übertragungskanal die Rahmeninformation der Nutzinformation übertragen wird, wobei es sich bei der Rahmeninformation um den Telegrammrahmen der Nutzinformation handelt.

Hierbei ist vorteilhafterweise vorgesehen, dass der Übertragungskanal für die Nutzinformation auf einer dafür vorgesehen Senderfrequenz übertragen wird und der Übertragungskanal für die Rahmeninformation auf einer sich von der Senderfrequenz unterscheidenden Pilotfrequenz übertragen wird.

Vorzugsweise ist auch noch vorgesehen, dass es sich bei dem Übertragungskanal für die Rahmeninformation um ein Pilotsignal bzw. einen Pilotton handelt.

Durch die vorliegende Erfindung ergibt sich somit der Vorteil, dass die Nutzinformation vom zeitlichen Rahmen des Telegrammrahmens bzw. des Rahmensignals bei der bisher bekannten Powerline Kommunikation befreit wird. Hierdurch ist es dann möglich, dass die Nutzinformation bzw. das Nutzsignal seine eigene zeitliche Form bzw. seinen eigenen zeitlichen Rahmen aufweisen kann, wodurch die Möglichkeit eröffnet wird, dass das Nutzsignal ein eigenes Protokoll aufweist bzw. umfasst. Somit kann die Nutzinformation dann beispielsweise Daten entsprechend dem DALI-Bus Protokoll aufweisen, was einer Tunnelung eines DALI-Bus Protokolls in seiner ursprünglichen Form entspricht.

Desweiteren sorgt das Pilotsignal bzw. der Pilotton für einen permanenten Empfang, wodurch eine geeignete Anpassung der Verstärkung durch die AGC eines Empfängers ermöglicht wird.

Dementsprechend ist wird die Form der Nutzinformation in der Zeit und auch im Pegel nicht mehr durch den Telegrammrahmen bzw. das Rahmensignal mitgeprägt.

Durch die vorliegende Erfindung wird somit die Pegelfunktion eines herkömmlichen Telegrammrahmens, eines herkömmlichen Run Ins und der Nutzinformation in NRZ-Kodierung durch den separaten Pilotton gebildet. Außerdem wird auch die Zeitfunktion eines herkömmlichen Telegrammrahmens, eines herkömmlichen Run Ins und der Nutzinformation in NRZ-Kodierung durch den separaten Pilotton gebildet.

Insgesamt wird also auch die zeitliche Synchronisation eines Empfängers durch einen separaten Pilotton geregelt.

Nachfolgend soll die Erfindung anhand von Ausführungsbeispielen und den beiliegenden Zeichnungen näher erläutert werden. Es zeigen:
- Figur 1: Übertragung der Daten im Stand der Technik bei der Powerline Kommunikation;
- Figur 2: erfindungsgemäße Übertragung bei der Powerline Kommunikation.

Figur 1 zeigt wie bereits erläutert, die bisher aus dem Stand der Technik bekannte Übertragung bei der Powerline Kommunikation. Hierbei wird der Telegrammrahmen bestehend aus Run In, Nutzinformation in NRZ Codierung im gleichen Frequenzkanal (Sendefrequenz) und sequentiell in der Zeit gebildet. D.h., dass die Nutzinformation bzw. das Nutzsignal zeitlich abhängig vom Telegrammrahmen bzw. Rahmensignal ist.

Figur 2 zeigt demgegenüber die erfindungsgemäße Lösung, bei der die Rahmeninformation bzw. der Telegrammrahmen in einem separatem Übertragungskanal bzw. Rahmenkanal zeitlich parallel zu dem Übertragungskanal bzw. Nutzkanal mit der Nutzinformation übertragen wird. Wie aus Figur 2 hervorgeht, ist hierbei vorgesehen, dass der Nutzkanal auf einer entsprechend dafür vorgesehenen Sendefrequenz und der Rahmenkanal gleichzeitig auf einer von der Sendefrequenz verschiedenen Pilotfrequenz bzw. Pilottonfrequenz übertragen wird.

Hierdurch ergibt sich der Vorteil, dass die Nutzinformation nicht weiter durch die Rahmeninformation bzw. das Rahmensignal in der Zeit und im Pegel mitgeprägt wird, wodurch es möglich wird, dass die Nutzinformation bzw. das Nutzsignal eine eigene zeitliche Form bzw. einen eigenen zeitlichen Rahmen und einen eigenen Pegel aufweisen kann.

Das erfindungsgemäße Verfahren eröffnet somit bei der Powerline Kommunikation die Möglichkeit, dass beispielsweise ein Anwender seine eigene digitale Schnittstelle bzw. sein eigenes digitales Protokoll zur Übertragung seiner Daten verwenden kann. Beispielsweise ist es dann möglich, dass ein DALI-Bus Protokoll getunnelt wird, ohne dass dem Verfahren zur Übertragung von Daten mittels Powerline Kommunikation das DALI-Bus Protokoll direkt bekannt sein muss. Die Eigenschaften des DALI-Bus Protokolls wirken hierbei nicht auf die Übertragungseigenschaften der Powerline Kommunikation.

Die vorliegende Erfindung bringt insgesamt die Vorteile mit sich, dass die zu übertragende Nutzinformation nicht mehr einer bestimmten zeitlichen Form unterliegt, die durch den Telegrammrahmen (Run In, Nutzinformation in NRZ-Kodierung und Stop Bits) im Nutzkanal gebildet werden müsste. Dementsprechend muss die Nutzinformation nicht mehr in ihrer Zeit bestimmt werden und außerdem kann diese in ihrer ursprünglichen zeitlichen Form übertragen werden.

Die Nutzinformation kann dabei auch zeitlich stetig ohne zwischenzeitliche Pause übertragen werden und muss dabei auch nicht zwingend digitalisiert werden. Das zu übertragende Nutzsignal kann somit ein analoges wie auch ein digitales Signal sein, das in weiten Grenzen dem Übertragungsverfahren im Wesentlichen unbekannt sein kann.

Zusätzlich unterliegt die zu übertragende Nutzinformation im Nutzkanal nicht einem bestimmten Pegel, weshalb der Pegel der Nutzinformation bzw. des Nutzsignals im Übertragungskanal variieren kann und auch den Nullpegel annehmen darf.

Die Trennung von Nutzinformation und Rahmeninformation einer Information in separate Übertragungskanäle erlaubt es dementsprechend, eine unbekannte Nutzinformation in ihrer ursprünglichen Form zu übertragen, ohne dass diese unbekannte Nutzinformation dem Rahmenkanal als bekannt vorliegen müsste.

Die unbekannte Information des Nutzkanals wird hierbei durch den separaten Rahmenkanal gekapselt bzw. bestimmt. Der separate Pilotton bildet die Rahmenbedingen für das unbekannte Signal bzw. eine Art physikalische "Transfer Black Box" für das Nutzsignal.

Durch die vorliegende Erfindung wird es für einen Hersteller auch möglich, ein Powerline Kommunikations Protokoll in einem elektronischen Baustein zu realisieren, wobei der Anwender dieser Bausteine diese mit seinem eigenen Übertragungsprotokoll zum Einsatz bringen kann und hierbei das eigene Übertragungsprotokoll zu einem anderen Zeitpunkt entwickeln bzw. schaffen kann, als das Powerline Kommunikations Protokoll des Herstellers.

Zusätzlich bringt die vorliegende Erfindung auch den Vorteil mit sich, dass über die Pilotfrequenz ein dauerhaftes Empfangssignal für ein Empfangsgerät zur Verfügung gestellt wird, so dass das Empfangsgerät sich in geeigneter Weise im Hinblick auf die Verstärkung anpassen kann. Hierdurch wird dann zusätzlich der Empfang der Daten im Nutzkanal optimiert.

## Patentansprüche

1. Verfahren zur Übertragung von Daten, wobei die Übertragung der Daten mittels Powerline Kommunikation erfolgt,
**dadurch gekennzeichnet,**
**dass** zeitlich parallel zum Übertragungskanal in dem die Nutzinformation übertragen wird, in einem weiteren Übertragungskanal die Rahmeninformation der Nutzinformation übertragen wird und
**dass** es sich bei der Rahmeninformation um den Telegrammrahmen der Nutzinformation handelt.

2. Verfahren nach Anspruch 1,
**dadurch gekennzeichnet,**
**dass** der Übertragungskanal für die Nutzinformation auf einer dafür vorgesehenen Sendefrequenz übertragen wird und der Übertragungskanal für die Rahmeninformation auf einer sich von der Sendefrequenz unterscheidenden Pilotfrequenz übertragen wird.

3. Verfahren nach einem der Ansprüche 1-2,
**dadurch gekennzeichnet,**
**dass** es sich bei dem Übertragungskanal für die Rahmeninformation um ein Pilotsignal bzw. einen Pilotton handelt.

4. Verfahren nach einem der Ansprüche 1-3,
**dadurch gekennzeichnet,**
**dass** die Nutzinformation Daten entsprechend dem DALI-Bus Protokoll aufweist.

## Claims

1. A method for transmitting data, wherein the transmission of the data takes place using power line communication,
**characterized in**
**that** temporally parallel to the transmission channel in which the useful information is transmitted, the frame information of said useful information is transmitted in a further transmission channel and
**that** the frame information is the telegram frame of the useful information.

2. A method according to Claim 1,
**characterized in**
**that** the transmission channel for the useful information is transmitted on a transmission frequency provided for this purpose and the transmission channel for the frame information is transmitted on a pilot frequency different from the transmission frequency.

3. A method according to any one of Claims 1-2,
**characterized in**
**that** the transmission channel for the frame information is a pilot signal or a pilot tone.

4. A method according to any one of the Claims 1-3,
**characterized in**
**that** the useful information has data corresponding to the DALI bus protocol.

## Revendications

1. Procédé de transmission de données, la transmission des données s'effectuant au moyen de la communication par courants porteurs,
**caractérisé en ce que,**
en parallèle dans le temps avec le canal de transmission dans lequel l'information utile est transmise, l'information de trame de l'information utile est transmise dans un autre canal de transmission et
**en ce que**, concernant l'information de trame, il s'agit de la trame de télégramme de l'information utile.

2. Procédé selon la revendication 1,
**caractérisé en ce que**
le canal de transmission pour l'information utile est transmis à une fréquence d'émission prévue pour cela, et le canal de transmission pour l'information de trame est transmis à une fréquence pilote différente de la fréquence d'émission.

3. Procédé selon l'une des revendications 1 à 2,
**caractérisé en ce que,**
concernant le canal de transmission pour l'information de trame, il s'agit d'un signal pilote ou d'une tonalité pilote.

4. Procédé selon l'une des revendications 1 à 3,
**caractérisé en ce que**
l'information utile comporte des données conformément au protocole de bus DALI.
